# EUROPÄISCHE PATENTSCHRIFT

(11) **EP 1 476 799 B1**
(45) Veröffentlichungstag und Bekanntmachung des Hinweises auf die Patenterteilung: **12.10.2005**
(21) Anmeldenummer: 03708042.1
(22) Anmeldetag: 18.02.2003
(51) Int. Cl.: G06F 1/00

(54) **VERFAHREN ZUR NUTZUNG EINES DIENSTES**
METHOD FOR USING A SERVICE
METHODE D'UTILISATION D'UN SERVICE

(30) Priorität: 18.02.2002 DE 10206691
(43) Veröffentlichungstag der Anmeldung: 17.11.2004
(73) Patentinhaber: SIEMENS AKTIENGESELLSCHAFT, 80333 München (DE)
(72) Erfinder: GIKAS, Diamantis, 90473 Nürnberg (DE); HÖFLER, Werner, 90542 Eckental (DE)
(86) Internationale Anmeldenummer: PCT/DE2003/000511
(87) Internationale Veröffentlichungsnummer: WO 2003/071398

(56) Entgegenhaltungen:
- WO-A-00/08909
- US-A- 5 917 912
- HEATHER KREGER: "Web Services Conceptual Architecture (WSCA 1.0)" IBM SOFTWARE GROUP, Mai 2001 (2001-05), XP002203346 Gefunden im Internet: <URL:http://www-3.ibm.com/software/solutio ns/webservices/pdf/WSCA.pdf> [gefunden am 2002-06-24]

## Beschreibung

Die Erfindung betrifft ein Verfahren zur Nutzung eines Dienstes gemäß dem Oberbegriff des Anspruchs 1. Dabei ist der Dienst in einem Speicher vorgehalten und der Nutzer meldet sich bei einer einen Zugang zu dem Dienst überwachenden Verwaltungseinheit an und spezifiziert den gewünschten Dienst.

Das Bereitstellen von Softwarepaketen oder deren Nutzung ist ein Dienst im Sinne der oben gewählten Formulierung. Softwarepakete namhafter Softwareanbieter, z. B. zum Einsatz in der Büroautomation, beinhalten üblicherweise ein Installationsprogramm. Mit dem Kauf des Softwarepaketes erhält der Benutzer ein Speichermedium, auf dem das Softwarepaket und das Installationsprogramm gespeichert ist. Der Nutzer führt das Installationsprogramm auf seinem Rechner aus, um das Softwarepaket oder Teile desselben zu installieren. Das Installationsprogramm bietet dabei Optionen an, die je nach Auswahl durch den Nutzer Einfluss auf den Umfang der Installation haben. Gebräuchliche Optionen sind dabei z. B. "minimale Installation", "Standardinstallation" und "vollständige Installation". Das Installationsprogramm solcher Softwarepakete entspricht der oben genannten Verwaltungseinheit.

Des Weiteren offerieren namhafte Softwareanbieter heute über das Internet die Möglichkeit, die von ihnen jeweils angebotene Software zu beziehen. Auch dies ist ein Dienst im Sinne der oben gewählten Formulierung. Dazu wählt der Nutzer den Rechner des Softwareanbieters an, spezifiziert über eine Benutzerschnittstelle die gewünschte Software und gelangt zu einem Bereich, in dem er die gewünschte Software abrufen kann. Hier entspricht die Benutzerschnittstelle der oben genannten Verwaltungseinheit. Die Begriffe Computer und Rechner werden synonym verwendet. Der Rechner des Nutzers wird auch als Endgerät bezeichnet.

Nachteilig bei diesen und anderen bekannten Verfahren ist jedoch, dass die Einflussmöglichkeit des Nutzers auf Art und Umfang des nachgefragten Dienstes beschränkt ist. Mit bekannten Verfahren kann der Nutzer z. B. auswählen, ob er eine Software zur Textverarbeitung oder zur Tabellenkalkulation zu beziehen oder zu installieren wünscht. Er kann aber nur genau die vom Anbieter bereitgehaltene Tabellenkalkulations- oder Textverarbeitungssoftware beziehen und hat keinen Einfluss auf Art und Umfang der darin jeweils enthaltenen Funktionen. Darüber hinaus wird dem Nutzer die Software insgesamt berechnet, unabhängig davon, welche der darin enthaltenen Funktionen er in welchem Umfang nutzt.

WO 00/08909 offenbart ein Verfahren, welches geeignet ist, die Verwendung von elektronischen Inhalten von Teilnehmern zu verfolgen.

Aus der IBM-Druckschrift "Web Services Conceptual Architecture", Mai 2001 ist ein Web Services Modell bekannt, das die Wirkverbindungen zwischen einem Service-Anbieter, einem Nutzer des Services und einer Anbieterübersicht beschreibt.

Ein Verfahren gemäß dem Oberbegriff des Anspruchs 1 ist aus der US-A-5 917 912 bekannt. Zur Generierung sämtlicher Einzelkomponenten müssen dem Nutzer sämtliche Komponenten bekannt sein.

Der Erfindung liegt daher die Aufgabe zugrunde, ein Verfahren anzugeben, das erweiterte Einflussmöglichkeiten des Nutzers auf Art und Umfang eines nachgefragten Dienstes berücksichtigt und eine darauf bezogene Berechnung ermöglicht.

Diese Aufgabe wird erfindungsgemäß mit den Merkmalen des Anspruchs 1 gelöst. Dazu ist bei einem gattungsgemäßen Verfahren vorgesehen, dass die Verwaltungseinheit zum Abruf eines der Spezifikation entsprechenden Dienstes dazu erforderliche Einzelkomponenten ermittelt. Dies berücksichtigt die zusätzlichen Einflussmöglichkeiten des Nutzers, der sich über eine entsprechende Spezifikation den von ihm gewünschten Dienst individuell zusammenstellen kann. Als Dienst wird dabei das Bereitstellen einer den Spezifikationen des Nutzers entsprechenden Software bezeichnet. Ferner ist vorgesehen, dass die Verwaltungseinheit für jede erforderliche Einzelkomponente einen Eintrag in einem dem Nutzer zugeordneten Lizenzdatensatz einer Lizenzdatenbank vornimmt. Dies macht den individuell zusammengestellten Dienst auch individuell be- und verrechenbar, indem jede erforderliche Einzelkomponente im Lizenzdatensatz gespeichert wird.

Die Verwaltungseinheit ermittelt zu der oder jeder erforderlichen Einzelkomponente anhand einer Abhängigkeitendatenbasis weitere Einzelkomponenten, die zur Generierung einer sämtliche Einzelkomponenten umfassenden, lauffähigen Software notwendig sind. Zur sprachlichen Unterscheidung wird eine Einzelkomponente als erforderliche Einzelkomponente bezeichnet, wenn sie in Erfüllung der Spezifikation des Nutzers vorgesehen ist. Jede zusätzlich zu der oder jeder erforderlichen Einzelkomponente ermittelte Einzelkomponente ist entweder eine obligatorische Komponente oder eine Standardkomponente im Sinne der oben eingeführten Terminologie. Solche Einzelkomponenten werden im Folgenden als notwendige Einzelkomponenten bezeichnet. Eine Kenntnis sämtlicher jeweils obligatorischer Komponenten oder Standardkomponenten wird für den Benutzer unnötig. Selbst für Benutzer, die aufgrund entsprechender detaillierter Kenntnisse sämtliche obligatorischen Komponenten und Standardkomponenten angeben könnten, ist eine diesbezügliche umfangreiche Spezifikation mühsam und zeitaufwendig und darüber hinaus ausgesprochen fehleranfällig. Wenn die Verwaltungseinheit zu der oder jeder erforderlichen Einzelkomponente automatisch diejenigen notwendigen, weiteren Einzelkomponenten ermittelt, die zur Generierung einer sämtliche Einzelkomponenten umfassenden, lauffähigen Software notwendig sind, kann sich der Nutzer auf eine seine Anforderungen und Wünsche widerspiegelnde Spezifikation beschränken.

Die Erfindung geht von der Erkenntnis aus, dass Software heute modular aus einer Vielzahl von Einzelkomponenten zusammengestellt wird. Ein Softwareanbieter integriert dabei in die jeweilige Software obligatorische Komponenten, Standardkomponenten und spezifische Komponenten. Obligatorische Komponenten sind Komponenten, ohne die die Software nicht betriebsfähig wäre. Ein Beispiel für eine Funktionalität einer obligatorischen Komponente ist der Zugriff auf die jeweilige Hardware, auf der die Software zum Einsatz kommen soll. Standardkomponenten sind Komponenten, ohne welche die Software z. B. nicht marktfähig wäre, weil jeder Nutzer die dadurch bereitgestellte Funktionalität erwartet. Ein Beispiel für eine Funktionalität einer Standardkomponente ist das Laden und Speichern von Daten, die mit der Software be- oder verarbeitet werden. Bei einer Textverarbeitung ist darüber hinaus üblicherweise z. B. eine Standardkomponente zum Formatieren des jeweiligen Textes vorgesehen. Sämtliche verbleibenden Komponenten sind spezifische Komponenten. Ein Beispiel für die Funktionalität einer spezifischen Komponente bei einer Textverarbeitung ist das Erstellen von Verzeichnissen und Indizes. Ein weiteres Beispiel für die Funktionalität spezifischer Komponenten bei einer Textverarbeitung ist der Satz mathematischer Formeln oder das Einfügen von Graphiken. Abhängig vom konkreten Anwendungsfall beim jeweiligen Nutzer werden einzelne, insbesondere spezifische Komponenten häufig, andere selten und wieder andere gar nicht verwendet.

Der Vorteil der Erfindung besteht darin, dass durch genaue Spezifikation des gewünschten Dienstes der Nutzer genau diejenigen Komponenten auswählen kann, die er tatsächlich benötigt. Dem Nutzer kann der Dienst in Abhängigkeit von diesen benötigten Komponenten berechnet werden.

Für den Nutzer besteht ferner ein Vorteil darin, dass der seinen Spezifikationen entsprechende Dienst häufig weniger Speicher benötigt als ein vergleichbarer "Standarddienst", der neben den vom Nutzer gewünschten Funktionen weitere Funktionen umfasst und deshalb mehr Speicher beansprucht. Darüber hinaus ist ein Dienst mit einer reduzierten aber gleichsam "maßgeschneiderten" Funktionalität häufig leichter zu beherrschen, als ein vergleichbarer Standarddienst mit entsprechend umfangreicherer Funktionalität. Schließlich kann der Nutzer einen Dienst gleichsam ausprobieren, indem er zunächst nur eine reduzierte Funktionalität abruft und dafür nur ein entsprechend geringer Betrag verrechnet wird. Wenn der Nutzer mit dem Dienst zufrieden ist, kann er weitere Funktionalität abrufen und damit z. B. die Leistungsfähigkeit eines abgerufenen Dienstes einem individuellen Lernfortschritt anpassen.

Für den Anbieter des Dienstes besteht ein Vorteil darin, dass er eine Übersicht über die nachgefragten Funktionalitäten und die damit korrespondierenden Einzelkomponenten gewinnt. Er kann damit seine Entwicklungsbemühungen besser an den Bedarf der Nutzer anpassen. Des Weiteren besteht für den Anbieter die Möglichkeit, leichter neue Kunden zu gewinnen, weil notwendig der Preis für einen kompletten Standarddienst mit einer Vielzahl von Komponenten höher ist, als der Preis für die Nutzung einzelner Komponenten. Eine mit dem Preis korrelierte "Einstiegsschwelle" ist daher geringer, weil der Nutzer sich den jeweiligen Dienst individuell zusammenstellen kann und nur diejenigen Komponenten berechnet werden, die er tatsächlich angefordert hat. Ein weiterer Vorteil für den Anbieter besteht in der Möglichkeit der Optimierung des Produktionsprozesses. So kann er Kosten für Lagerhaltung reduzieren, er braucht keine verschiedenen Dienste zu erstellen und zu vertreiben, sondern er kann das Erstellen der Dienste von entsprechender Nachfrage abhängig machen. Schließlich lässt sich die Entwicklung von Diensten durch die Aufteilung in Einzelkomponenten und die damit bewirkte Entkopplung flexibler gestalten.

Vorteilhafte Ausgestaltungen der Erfindung sind Gegenstand der Unteransprüche.

Wenn dem Nutzer durch die Verwaltungseinheit der Dienst in Abhängigkeit von der oder jeder erforderlichen Einzelkomponente berechnet wird, ergibt sich für den Benutzer eine enge Kopplung zwischen dem oder jedem Dienst, den er in Anspruch nimmt, und einem dabei oder damit erreichbaren Ergebnis. Dies soll am Beispiel eines Architekten als Nutzer illustriert werden. Der Architekt, der als Dienst z. B. das Durchführen einer speziellen Berechnung oder das Ausdrucken von Bauplänen auf einem großformatigen Drucker in Anspruch nimmt, stellt selbst seinem Kunden eine Rechnung im Hinblick auf die erstellten Berechnungen oder Baupläne. Damit sind in Anspruch genommener Dienst einerseits und damit erbrachte und verrechenbare Leistung andererseits direkt miteinander korreliert.

Vorteilhaft ist eine Nutzungsüberwachung zur Ermittlung von Dauer und/oder Umfang der Nutzung der oder jeder Einzelkomponente vorgesehen. Damit wird es möglich, die Berechnung abgerufener Dienste von der Art der jeweiligen Inanspruchnahme abhängig zu machen. Ein Kriterium dabei kann die Dauer der Nutzung sein. Eine komplexe Berechnung nimmt mehr Zeit in Anspruch als eine einfache Berechnung und wird dem Nutzer damit anders berechnet als die einfache Berechnung. Ein weiteres, zusätzliches oder alternatives Kriterium ist der Umfang der Nutzung. Der Umfang der Nutzung kann sich auf die Häufigkeit der Nutzung oder auf die jeweils benötigten oder ermittelten Daten beziehen. Der Umfang der Nutzung kann jedoch auch berücksichtigen, dass z. B. wiederholt der gleiche Dienst in Anspruch genommen wird, weil der Nutzer noch unerfahren ist, oder dass häufig eine gleichartige Berechnung durchgeführt wird, deren Parameter sich jeweils nur geringfügig ändern.

Weiter vorteilhaft ist die Verwaltungseinheit ein Softwareprogramm, das in dem gleichen Speicher vorgehalten wird, aus dem der Dienst abgerufen wird. Dies ermöglicht einerseits eine ausreichend enge Kopplung zwischen Dienst und Verwaltungseinheit, so dass der Verwaltungseinheit Informationen über den oder jeden abrufbaren Dienst zur Verfügung stehen. Andererseits gewährleistet die Realisierung als Softwareprogramm die erforderliche Flexibilität der Verwaltungseinheit bei der Verwaltung dieser Informationen.

Wenn die Nutzungsüberwachung in die jeweils generierte Software integriert ist, bleibt Art und Umfang der jeweiligen Nutzung auch dann ermittelbar, wenn der Zugriff auf die Software oder deren Verwendung ohne die Verwaltungseinheit erfolgt. Dies ist z. B. dann der Fall, wenn die Software auf den Rechner des Nutzers übertragen wurde. Die Nutzungsüberwachung als Bestandteil der übertragenen Software ermittelt Art und Umfang der Nutzung. Diese Daten stehen für eine nutzungsbezogene Berechnung des Dienstes zur Verfügung.

Wenn der Rechner ein aus Sicht des Nutzers entfernter, z. B. über das Internet erreichbarer Rechner ist, steht der oder jeder Dienst sowie die Möglichkeit der Anpassung und Modifikation bereits genutzter Dienste dem Nutzer an nahezu jedem Ort zur Verfügung. Der Nutzer ist damit nicht davon abhängig, beispielsweise stets bestimmte Datenträger mit sich zu führen. Der Speicher des entfernten Rechners ist damit entsprechend ein entfernter Speicher. Solche Speicher können z. B. als verteilte Speicher in einem vernetzten System mit einer Kombination von Speichermedien ausgeführt sein. Die Verwaltungseinheit ist entsprechend eine entfernte Verwaltungseinheit.

Vorteilhaft übermittelt die Nutzungsüberwachung Nutzungsdaten an die entfernte Verwaltungseinheit. Die Nutzungsdaten werden von der Nutzungsüberwachung zur Ermittlung von Dauer und/oder Umfang der Nutzung der oder jeder Einzelkomponente aufgenommen. Damit ist es möglich, dass die Nutzungsüberwachung als Bestandteil der übertragenen Software Art und Umfang der Nutzung ermittelt. Die diesbezüglichen Daten werden zu vorgebbaren oder vorgegebenen Zeitpunkten, z. B. in regelmäßigen zeitlichen Abständen, oder bei Erreichen eines vorgegebenen oder vorgebbaren Schwellwertes in Bezug auf Art und Umfang der Nutzung an die Verwaltungseinheit transferiert.

Vorteilhaft übermittelt der Nutzer die Spezifikation an die Verwaltungseinheit, indem er eine Auswahl aus einer von der Verwaltungseinheit bereitgestellten Auswahlliste trifft. Dies macht es für den Nutzer entbehrlich, sämtliche Spezifikationsmöglichkeiten vorab kennen zu müssen. Zudem werden durch die Auswahlliste Möglichkeiten einer Falscheingabe reduziert.

Weiter vorteilhaft wird ein Umfang der Auswahlliste anhand des Lizenzdatensatzes festgelegt. Damit werden die durch den Nutzer auswählbaren Spezifikationsmöglichkeiten beschränkt. Die Auswahlliste wird übersichtlicher und umfasst nur noch solche Spezifikationsmöglichkeiten, die in Zusammenhang mit bereits abgerufenen Diensten und den dafür vorgenommenen Spezifikationen stehen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen:
- FIG 1: ein Szenario, in dem das erfindungsgemäße Verfahren zur Anwendung kommen kann,
- FIG 2: einen Inhalt eines Speichers und
- FIG 3: das Zusammenwirken der im Speicher hinterlegten Elemente.

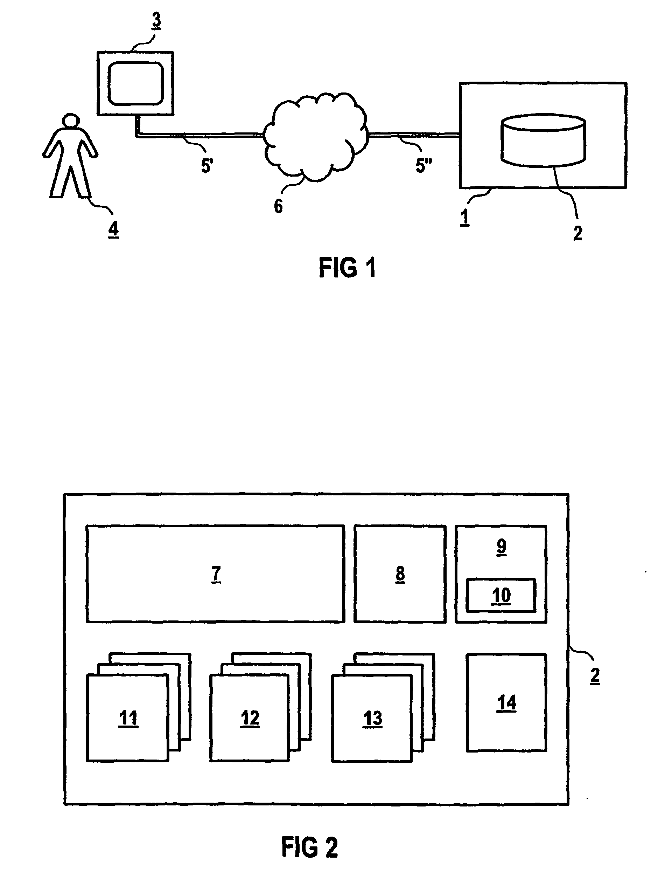

FIG 1 zeigt ein Szenario, in dem das erfindungsgemäße Verfahren zur Anwendung kommen kann, mit einem Rechner 1 mit einem Speicher 2 und einem als Endgerät 3 bezeichneten Rechner 3 eines Nutzers 4. Rechner 1 und Endgerät 3 sind über eine Datenleitung 5', 5" und das Internet 6 miteinander kommunikativ verbunden.

FIG 2 zeigt den Inhalt des Speichers 2. Im Speicher 2 sind eine Verwaltungseinheit 7, eine Nutzungsüberwachung 8 und eine Lizenzdatenbank 9 mit einem dem Nutzer 4 (FIG 1) zugeordneten Lizenzdatensatz 10 vorgehalten. Ferner sind im Speicher 2 eine Anzahl von Einzelkomponenten 11, 12, 13 sowie eine Abhängigkeitendatenbasis 14 gespeichert.

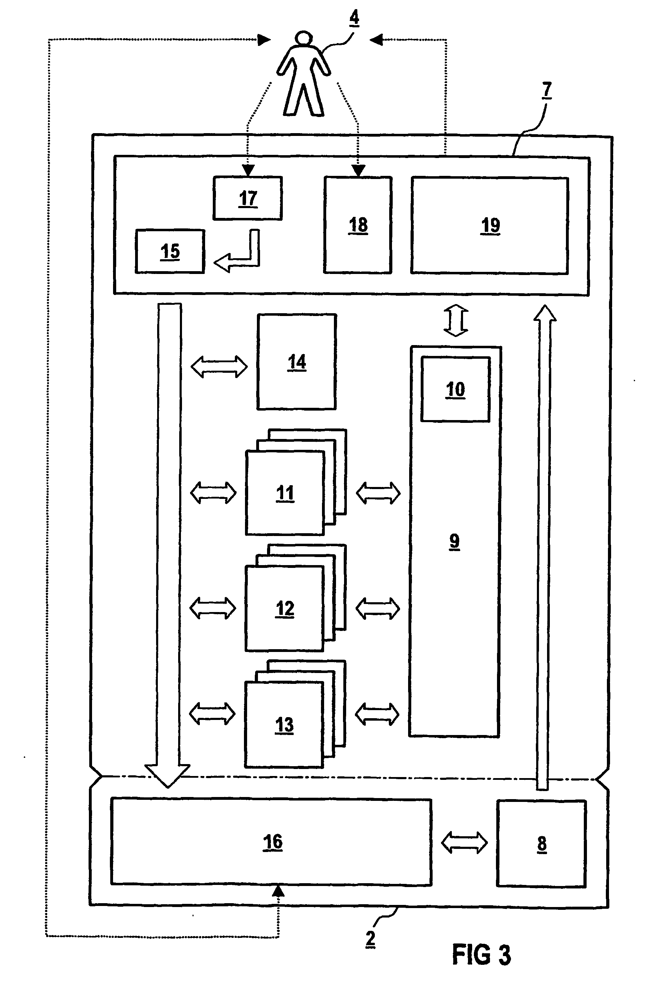

FIG 3 zeigt das Zusammenwirken der im Speicher 2 hinterlegten Elemente 7, 8, 9, 10, 11, 12, 13, 14. Die Verwaltungseinheit 7 generiert anhand einer Spezifikation 15 unter Berücksichtigung der Abhängigkeitendatenbasis 14 einen Dienst 16 aus den Einzelkomponenten 11, 12, 13. Die Generierung des Dienstes 16 soll durch den vertikalen, abwärts gerichteten Blockpfeil veranschaulicht werden. Die zwischen diesem Blockpfeil und den Einzelkomponenten 11, 12, 13 und der Abhängigkeitendatenbasis 14 eingezeichneten horizontalen Doppelpfeile sollen den Einfluss der genannten Elemente 11, 12, 13, 14 auf das Generieren des Dienstes 16 veranschaulichen.

Die Spezifikation 15 ist das Ergebnis einer Eingabe des Nutzers 4 anhand einer Auswahlliste 17. Der gestrichelte Pfeil zwischen Nutzer 4 und Auswahlliste 17 soll dabei die Eingabe des Nutzers 4 veranschaulichen. Die Auswahlliste 17 wird dem Nutzer 4 durch die Verwaltungseinheit 7 präsentiert, nachdem er sich mittels einer Nutzerverwaltung 18 angemeldet hat. Die Nutzerverwaltung 18 ist Bestandteil der Verwaltungseinheit 7. Die Nutzerverwaltung 18 fordert den Nutzer 4 zur Eingabe z. B. eines Kennwortes auf, so dass eine eindeutige Identifikation des Nutzers 4 und eine Unterscheidung berechtigter Nutzer 4 und unberechtigter Nutzer möglich ist. Dabei soll der gestrichelte Pfeil zwischen Nutzer 4 und Nutzerverwaltung 18 die Identifikation des Nutzers 4 veranschaulichen. Zu jedem als berechtigt identifizierten Nutzer 4 hat die Nutzerverwaltung 18 Zugriff auf nicht dargestellte nutzerspezifische Daten wie z. B. dessen Adresse. Gegebenenfalls umfassen die nutzerspezifischen Daten auch eine Bankverbindüng oder ein beim Anbieter des Dienstes 16 geführtes Konto, auf das der Nutzer 4 z. B. einen bestimmten Betrag eingezahlt wird, der mit jeder Nutzung des Dienstes 16 verringert wird.

Die Auswahlliste 17 umfasst zumindest eine Aufstellung derjenigen Dienste, die bei oder mittels der Verwaltungseinheit 7 abrufbar sind. Die Auswahlliste 17 kann darüber hinaus Vorschläge für Ergänzungen oder Erweiterungen bereits früher genutzter Dienste oder des aktuell spezifizierten Dienstes enthalten. Dabei stellt grundsätzlich jede Einzelkomponente 11, 12, 13 und jede zulässige Kombination von Einzelkomponenten 11, 12, 13 einen eigenen Dienst dar. Die Zulässigkeit der Kombination bestimmter Einzelkomponenten 11, 12, 13 ergibt sich anhand der Abhängigkeitendatenbasis 14. Ferner ergibt sich anhand der Abhängigkeitendatenbasis 14, welche weiteren Einzelkomponenten 11, 12, 13 notwendig sind, um eine bestimmte Einzelkomponente 11, 12, 13 und den damit zur Verfügung gestellten Dienst zu nutzen. Die Abhängigkeitendatenbasis 14 wird z. B. durch die Verwaltungseinheit 7 anhand von in den Einzelkomponenten 11, 12, 13 jeweils enthaltenen Informationen über untereinander bestehende Abhängigkeiten erzeugt.

Durch die Spezifikation 15 wählt der Nutzer 4 bestimmte Einzelkomponenten 11, 12, 13 oder Kombinationen davon aus. Diese Einzelkomponenten 11, 12, 13 sind die erforderlichen Einzelkomponenten 11, 12, 13. Jede erforderliche Einzelkomponente 11, 12, 13 fließt in den Dienst 16 ein. Neben den erforderlichen Einzelkomponenten 11, 12, 13 können aufgrund entsprechender Daten der Abhängigkeitendatenbasis 14 weitere Einzelkomponenten 11, 12, 13 in den Dienst 16 einfließen. Diese weiteren Einzelkomponenten 11, 12, 13 sind die notwendigen Einzelkomponenten 11, 12, 13, da ohne diese die erforderlichen Einzelkomponenten 11, 12, 13 nicht nutzbar sind. Die Kombination der durch den Nutzer 4 mittels der Spezifikation 15 direkt oder indirekt ausgewählten erforderlichen Einzelkomponenten 11, 12, 13 und der anhand der Abhängigkeitendatenbasis 14 durch die Verwaltungseinheit 7 ermittelten notwendigen Einzelkomponenten 11, 12, 13 bildet eine Software 16. Die Software 16 und der in dem Bereitstellen der Software 16 bestehende Dienst 16 werden mit jeweils gleichem Bezugszeichen bezeichnet. Der gestrichelte Pfeil zwischen Nutzer 4 und Dienst 16 soll die Benutzung des Dienstes durch den Nutzer und das damit einhergehende Erzeugen von Ergebnissen für den Nutzer 4 veranschaulichen.

Die der Spezifikation 15 entsprechende Software 16 wird entweder auf dem Rechner 2 (FIG 1) genutzt oder durch die Verwaltungseinheit 7 auf das Endgerät 3 (FIG 1) des Nutzers 4 übertragen und dort genutzt. Zur Verrechnung der Software 16 im Hinblick auf Art und Umfang ihrer Nutzung wird zumindest für jede erforderliche Einzelkomponente 11, 12, 13, gegebenenfalls zusätzlich auch für jede notwendige Einzelkomponente 11, 12, 13 ein Eintrag in dem dem Nutzer 4 zugeordneten Lizenzdatensatz 10 der Lizenzdatenbank 9 vorgenommen. Letzteres wird durch die horizontalen Doppelpfeile zwischen den Einzelkomponenten 11, 12, 13 und der Lizenzdatenbank 9 veranschaulicht.

Zur tatsächlichen Berechnung des in Anspruch genommenen Dienstes 16 ist einerseits die Nutzungsüberwachung 8 und andererseits eine in die Verwaltungseinheit 7 integrierte Berechnungseinheit 19 vorgesehen. Die Nutzungsüberwachung 8 ermittelt als Maß für die Dauer und/oder den Umfang der Nutzung des Dienstes 16 Dauer und/oder Umfang der Nutzung der oder jeder erforderlichen Einzelkomponente 11, 12, 13, gegebenenfalls zusätzlich auch der oder jeder notwendigen Einzelkomponente 11, 12, 13, die in die Software 16 eingeflossen ist. Mit diesen Daten und den Daten des Lizenzdatensatzes 10 kann durch die Berechnungseinheit 19 eine Berechnung der Software 16 erfolgen. Der Lizenzdatensatz 10 umfasst neben Einträgen für die in die Software 16 eingeflossenen Einzelkomponenten 11, 12, 13 darüber hinaus auch nutzerspezifische Daten wie z. B. Rabatte in Form von Mengen- oder Kundenrabatten. Des Weiteren können Einführungspreise bei erstmaligem Angebot eines Dienstes oder bei der erstmaligen Nutzung eines Dienstes berücksichtigt sein. Der gestrichelte Pfeil zwischen Verwaltungseinheit 7 und Nutzer 4 soll die Verrechnung der Nutzung der Software 16 an den Nutzer 4 veranschaulichen.

Die Nutzungsüberwachung 8 kann auch in die Software 16 integriert sein (nicht dargestellt). Dann ist es möglich, dass der Nutzer 4 die Software 16 auf seinem Endgerät 3 (FIG 1) nutzt. Dann wäre der durch die horizontale strichpunktierte Linie als "abtrennbar" markierte Bereich des Speichers 2 ein ansonsten nicht dargestellter Speicher des Endgerätes 3. In einer solchen Konstellation kann die Nutzungsüberwachung 8 die Nutzungsdaten z. B. über das Internet 6 (FIG 1) an die entfernte Verwaltungseinheit 7 übermitteln.

Zusammenfassend lässt sich damit eine Ausgestaltung der Erfindung wie folgt kurz darstellen:
In einem Speicher 2 eines entfernten Rechners 1 werden Softwarekomponenten 11, 12, 13 vorgehalten. Aus diesen kann gemäß einer Spezifikation 15 eines Nutzers 4 ein Dienst 16, eine nutzerspezifische Software 16, generiert werden. Dazu ist eine Verwaltungseinheit 16 vorgesehen, die den Zugang zu dem Dienst 16 überwacht und bei der sich der Nutzer 4 anmeldet und den gewünschten Dienst 16 spezifiziert. Die Verwaltungseinheit 7 ermittelt die erforderlichen Softwarekomponenten 11, 12, 13 zum Abruf eines der Spezifikation 15 entsprechenden Dienstes 16. Ferner nimmt die Verwaltungseinheit 7 für jede erforderliche Einzelkomponente 11, 12, 13 einen Eintrag in einem dem Nutzer 4 zugeordneten Lizenzdatensatz 10 einer Lizenzdatenbank 9 vor. Damit kann die für den Nutzer 4 individuell zusammengestellte Software 16 dem Nutzer in Bezug auf die ausgewählten Komponenten 11, 12, 13 berechnet werden. Dem Nutzer 4 wird damit nur diejenige Leistung berechnet, die er benötigt und die er selbst angefordert hat.

Der Nutzer 4 kann sich mit seinem Endgerät 3, z. B. einem Programmiergerät 3, bei einem Rechner 1 eines Softwareanbieters z. B. über das Internet 6 einwählen. Dort spezifiziert er den jeweils gewünschten Dienst 16 und wählt dabei z. B. Komponenten 11, 12, 13 zur Visualisierung technischer Vorgänge, Komponenten 11, 12, 13 zur Steuerung und/oder Regelung technischer Vorgänge sowie Komponenten 11, 12, 13 zur Erfassung und Verarbeitung von Produktionsdaten aus. Die damit für ihn individuell erstellte Software 16 stellt z. B. eine nutzerspezifische Entwicklungsumgebung 16 dar. Damit generiert der Nutzer 4 ein Programm zur Steuerung und/oder Überwachung eines technischen Prozesses, z. B. für eine Fertigungsstraße. Berechnet wird dem Nutzer 4 der in Anspruch genommene Dienst 16 in Bezug auf die selbst ausgewählten Komponenten 11, 12, 13, gegebenenfalls in Bezug auf Art und Umfang der Nutzung dieser Komponenten 11, 12, 13.

Dies ermöglicht dem Nutzer 4 den Umgang mit einer exakt seinen Anforderungen 15 entsprechenden Software 16, deren Nutzung ihm in engem Zusammenhang mit dem von ihm dabei erbrachten Arbeitsergebnis berechnet werden kann.

## Patentansprüche

1. Verfahren zur Nutzung zumindest eines in einem Speicher (2) eines Rechners (1) vorgehaltenen Dienstes (16) durch einen Nutzer (4), welcher sich bei einer einen Zugang zu dem Dienst (16) überwachenden Verwaltungseinheit (7) anmeldet und den gewünschten Dienst (16) spezifiziert, wobei die Verwaltungseinheit (7)
- zum Abruf eines der Spezifikation (15) entsprechenden Dienstes (16) dazu erforderliche Einzelkomponenten (11, 12, 13) ermittelt und
- für jede erforderliche Einzelkomponente (11, 12, 13) einen Eintrag in einem dem Nutzer (4) zugeordneten Lizenzdatensatz (10) einer Lizenzdatenbank (9) vornimmt,
**dadurch gekennzeichnet, dass**
- der Dienst (16) eine der Spezifikation (15) entsprechende Software (16) ist, welche durch die Verwaltungseinheit (7) aus der erforderlichen Anzahl von Einzelkomponenten (11, 12, 13) generiert wird, wobei
- der Dienst vom Rechner (2) genutzt wird oder
- der Dienst vom Rechner (2) auf ein Endgerät (3) des Nutzers (4) übertragen und dort genutzt wird, und
- die Verwaltungseinheit (7) zu der oder jeder erforderlichen Einzelkomponente (11, 12, 13) anhand einer Abhängigkeitendatenbasis (14) weitere Einzelkomponenten (11, 12, 13) ermittelt, die zur Generierung einer sämtliche Einzelkomponenten (11, 12, 13) umfassenden, lauffähigen Software (16) notwendig sind.

2. Verfahren nach Anspruch 1, wobei zur Kopplung zwischen dem oder jedem Dienst und einem dabei oder damit erreichbaren Ergebnis dem Nutzer (4) durch die Verwaltungseinheit (7) der Dienst (16) in Abhängigkeit von der oder jeder erforderlichen Einzelkomponente (11, 12, 13) berechnet wird.

3. Verfahren nach Anspruch 2, wobei eine Nutzungsüberwachung (8) zur Ermittlung von Dauer und/oder Umfang der Nutzung der oder jeder Einzelkomponente (11, 12, 13) vorgesehen ist.

4. Verfahren nach Anspruch 1, 2 oder 3, wobei die Verwaltungseinheit (7) ein Softwareprogramm (7) ist, das in dem gleichen Speicher (2) vorgehalten wird, aus dem der Dienst (16) abgerufen wird.

5. Verfahren nach Anspruch 3, wobei die Nutzungsüberwachung (8) in die Software (16) integriert ist.

6. Verfahren nach einem der obigen Ansprüche, wobei der Rechner (2) ein aus Sicht des Nutzers (4) entfernter Rechner (2) ist.

7. Verfahren nach Anspruch 5 und 6, wobei die Nutzungsüberwachung (8) Nutzungsdaten an die entfernte Verwaltungseinheit (7) übermittelt.

8. Verfahren nach einem der obigen Ansprüche, wobei der Nutzer (4) die Spezifikation (15) übermittelt, indem er eine Auswahl aus einer von der Verwaltungseinheit (7) bereitgestellten Auswahlliste (17) trifft.

9. Verfahren nach Anspruch 8, wobei ein Umfang der Auswahlliste (17) anhand des Lizenzdatensatzes (10) festgelegt wird.

## Claims

1. Method for use of at least one service (16) which is stored in a memory (2) in a computer (1) by a user (4) who registers with an administration unit (7) (which monitors access to the service (16)) and specifies the desired service (16), with the administration unit (7)
- determining individual components (11, 12, 13) which are required to call a service (16) which corresponds to the specification (15), and
- making an entry for each required individual component (11, 12, 13) in a license data record (10), which is associated with the user (4), in a license databank (9),
**characterized in that**
- the service (16) is software (16) which corresponds to the specification (15) and is generated by the administration unit (7) from the required number of individual components (11, 12, 13), wherein
- the service is used by the computer (2) or
- the service is transmitted from the computer (2) to a terminal (3) of the user (4) where it is used, and
- the administration unit (7) determines further individual components (11, 12, 13) in addition to the or each required individual component (11, 12, 13) on the basis of a relational database (14), which further individual components (11, 12, 13) are required for generation of software (16) which can be run and covers all of the individual components (11, 12, 13).

2. Method according to Claim 1, wherein the administration unit (7) bills the user (4) for the service (16) as a function of the or each required individual component (11, 12, 13) for coupling between the or each service and a result which can be achieved in this case or in this way.

3. Method according to Claim 2, wherein usage monitoring (8) is provided in order to determine the duration and/or the extent of use of the or each individual component (11, 12, 13).

4. Method according to Claim 1, 2 or 3, wherein the administration unit (7) is a software program (7), which is stored in the same memory (2) from which the service (16) is called.

5. Method according to Claim 3, wherein the usage monitoring (8) is integrated in the software (16).

6. Method according to one of the above claims, wherein the computer (2) is a computer (2) which is remote from the view of the user (4).

7. Method according to Claim 5 or 6, wherein the usage monitoring (8) transmits payload data to the remote administration unit (7).

8. Method according to one of the above claims, wherein the user (4) transmits the specification (15) by making a selection from a selection list (17) which is provided by the administration unit (7).

9. Method according to Claim 8, wherein the scope of the selection list (17) is defined on the basis of the licensed data record (10).

## Revendications

1. Procédé pour l'utilisation d'au moins un service (16), conservé dans une mémoire (2) d'un ordinateur (1), par un utilisateur (4) qui s'annonce auprès d'une unité de gestion (7) surveillant un accès au service (16) et qui spécifie le service souhaité (16), dans lequel l'unité de gestion (7)
- pour l'appel d'un service (16) correspondant à la spécification (15), détermine des composants individuels (11, 12, 13) requis à cet effet, et
- pour chaque composant individuel (11, 12, 13) requis, effectue un enregistrement dans un bloc de données de licence (10), associé à l'utilisateur (4), d'une base de données de licence (9),
**caractérisé par le fait que**
- le service (16) est un logiciel (16) qui correspond à la spécification (15) et qui est produit par l'unité de gestion (7) à partir du nombre requis de composants individuels (11, 12, 13),
- le service étant utilisé par l'ordinateur (2) ou
- le service étant transmis par l'ordinateur (2) sur un terminal (3) de l'utilisateur (4) et étant utilisé là, et
- l'unité de gestion (7) détermine, pour le ou chaque composant individuel (11, 12, 13) requis et en fonction d'une base de données de dépendances (14), d'autres composants individuels (11, 12, 13) qui sont nécessaires pour la production d'un logiciel (16) exécutable comprenant tous les composants individuels (11, 12, 13).

2. Procédé selon la revendication 1, dans lequel, pour le couplage entre le ou chaque service et un résultat pouvant être obtenu avec celui-ci, le service (16) est facturé à l'utilisateur (4) par l'unité de gestion (7) en fonction du ou de chaque composant individuel (11, 12, 13) requis.

3. Procédé selon la revendication 2, dans lequel une surveillance d'utilisation (8) est prévue pour la détermination de la durée et/ou de l'étendue de l'utilisation du ou de chaque composant individuel (11, 12, 13).

4. Procédé selon la revendication 1, 2 ou 3, dans lequel l'unité de gestion (7) est un programme logiciel (7) qui est conservé dans la même mémoire (2) que celle à partir de laquelle le service (16) est appelé.

5. Procédé selon la revendication 3, dans lequel la surveillance d'utilisation (8) est intégrée dans le logiciel (16).

6. Procédé selon l'une des revendications précédentes, dans lequel l'ordinateur (2) est un ordinateur (2) distant du point de vue de l'utilisateur (4).

7. Procédé selon l'une des revendications 5 et 6, dans lequel la surveillance d'utilisation (8) transmet des données d'utilisation à l'unité de gestion (7) distante.

8. Procédé selon l'une des revendications précédentes, dans lequel l'utilisateur (4) transmet les spécifications (15) en effectuant une sélection parmi une liste de sélection (17) fournie par l'unité de gestion (7).

9. Procédé selon la revendication 8, dans lequel l'étendue de la liste de sélection (17) est fixée à l'aide du bloc de données de licence (10).
